# EUROPEAN PATENT SPECIFICATION

(11) **EP 3 674 771 B1**
(45) Date of publication and mention of the grant of the patent: **12.02.2025**
(21) Application number: 18248050.9
(22) Date of filing: 27.12.2018
(51) Int. Cl.: G02B 15/177, G02B 21/02

(54) **OPTICAL SYSTEM AND METHOD FOR IMAGING AN OBJECT**
OPTISCHES SYSTEM UND VERFAHREN ZUR ABBILDUNG EINES OBJEKTS
SYSTÈME OPTIQUE ET PROCÉDÉ D'IMAGERIE D'UN OBJET

(43) Date of publication of application: 01.07.2020
(73) Proprietor: Leica Instruments (Singapore) Pte. Ltd., 608924 Singapore (SG)
(72) Inventor: Paulus, Robert, 88145 Hergatz (DE); Honegger, Marc, 8590 Romanshorn (CH)
(74) Representative: Schaumburg und Partner Patentanwälte mbB

(56) References cited:
- EP-A1- 1 369 663
- EP-A1- 2 392 959
- DE-A1- 102010 061 862
- US-A1- 2014 168 763
- US-A1- 2014 313 589

## Description

### Technical field

The present invention relates to an optical system and a method for imaging an object onto an image plane of a microscope.

For use in a microscope, optical systems are known, which provide a zoom function enabling an object to be imaged onto an image plane with continuously variable magnification. For this purpose, such an optical system includes one or more lens groups which can be moved along the optical axis for zooming between a short focal length extremity and a long focal length extremity. Usually, the optical system includes a cam mechanism or the like in order to move the zoom lens groups in an interdependent manner.

A microscope including an optical zoom system as described above further comprises a focusing device which is designed to focus the object onto the image plane for any zoom setting, i.e. for any positioning of the zoom lens groups along the optical axis. Usually, such a focusing device is configured to vary an axial distance from an object plane, on which the object is located, to the image plane. For this purpose, the focusing device may move the optical system relative to a microscope stage on which the object is arranged, or vice versa.

Providing the microscope with such a focusing device involves considerable effort in terms of the components which have to be provided in order to achieve the relative movement between the optical system and the microscope stage. Further, as the focusing device has to be operated by the user, the focusing operation is cumbersome and time-consuming.

Document US 2014/168763 A1 discloses an optical system which includes, starting from the object side, an objective of fixed focal length, an afocal Galilean telescope system, an afocal zoom system and a tube lens. The afocal zoom system which is arranged between the Galilean telescope system and the tube lens comprises in total five lens groups with two outer groups and three inner groups. Both outer lens groups have positive power.

Document US 2014/313589 A1 discloses a telecentric modular zoom system which comprises in total four lens groups. A first lens group and a second lens group have positive power, and a fourth lens group is movable along the optical axis thereof.

Therefore, it is an object of the present invention to provide an optical system for imaging an object onto an image plane of a microscope, said optical system enabling a focusing operation in a convenient and precise manner.

### Summary

In order to achieve the afore-mentioned object, an optical system for imaging an object onto an image plane of a microscope according to claim 1 is provided, the optical system comprising a first lens group and a fourth lens group which are stationary, and a second lens group and a third lens group which are independently movable along an optical axis of the optical system for focusing the object onto the image plane while zooming between a short focal length extremity and a long focal length extremity.

The optical system as described above enables continuously zooming, i.e. continuously varying a total focal length of the optical system between the short focal length extremity and the long focal length extremity, and at the same time continuously focusing, i.e. continuously varying a distance from the object plane to the image plane.

A coupled zooming and focusing control is achieved by independently moving the second lens group and the third lens group while the first lens group and the fourth lens group remain stationary. Thus, it is possible to simultaneously adjust the magnification, based on which the object is imaged onto the image plane of the microscope, and the axial distance from the object plane, on which the object is arranged, to the image plane. As a result, the optical system enables the user of the microscope to realize the desired zoom and focus adjustments in a convenient and precise manner.

In this respect, it is to be noted that the afore-mentioned image plane is meant to be any plane on which an image is created by the optical system. In particular, such an image plane may comprise a plane on which a sensor as for instance a digital camera is located, and a plane on which an intermediate image is generated.

The first lens group having negative power, the second lens group having positive power, the third lens group having positive power and the fourth lens group having negative power are arranged in this order from an object side. According to this embodiment, the stationary lens groups are formed the outer lens groups of the optical system, i.e. by the first and fourth lens groups facing towards the object side and the image side, respectively. Thus, a compact design of the optical system is achieved.

In a preferred embodiment, the optical system is configured to be telecentric on an object side and telecentric on an image side. Such a double-sided telecentric configuration enables the object to be imaged with high image quality.

In a preferred embodiment, the short focal length extremity and the long focal length extremity define a zoom range from Z1=0.9 to Z2=5. A limitation of the zoom range to the afore-mentioned values Z1 and Z2 allows a design of the optical system in which the moving distances of the second lens group and the third lens group when performing the coupled zooming and focusing operation do not become too large. Thus, a compact design of the optical system is achieved.

Preferably, memory means are provided for storing information assigning each combination of zoom setting and focus setting to a corresponding lens group position along the optical axis for each of the second and third lens groups. Storing the zoom and focus information enables the optical system to be controlled in a simple and precise manner.

In a preferred embodiment, the optical system comprises an optical element for coaxial light coupling. Such an optical element may be used for coupling illumination light emitted by a light source of the microscope into the optical system. Thus, the optical system can be used for both illuminating and imaging the object.

In a preferred embodiment, the optical element is arranged in a segment of the optical system where an angular characteristic of light passing the optical system is the same for the whole range of zoom and focus positions of the second lens group and the third lens group. In case that, for instance, an illumination path is coupled into the optical system by means of the afore-mentioned optical element, the entire zoom range, i.e. all zoom positions of the second and third lens groups, can be supplied with light passing the optical system from the object plane to the image plane without having to perform a corresponding zoom operation on the illumination light path which is coupled into the optical system by the optical element.

Preferably, the optical element is arranged in the fourth lens group.

In case that the optical element is arranged in the fourth lens group, the latter preferably comprises a first sub-lens group having negative power and a second sub-lens group having positive power arranged in this order from the object side, wherein the optical element is arranged between the first sub-lens group and the second sub-lens group.

According to another aspect, a method is provided for imaging an object onto an image plane of a microscope, comprising the steps of holding a first lens group and a fourth lens group stationary during imaging of the object; and moving a second lens group and a third lens group independently along an optical axis for focusing the object onto the image plane while zooming between a short focal length extremity and a long focal length extremity.

According to another aspect, a microscope is provided comprising an image plane and an optical system as described above.

### Short Description of the Figures

Hereinafter, preferred embodiments are described with reference to the drawings in which:
Figure 1 is a lens diagram illustrating a configuration of an optical system for different zoom settings and different focusing settings according to an embodiment of the present invention;
Figure 2 is a lens diagram illustrating a configuration of an optical system for different zoom settings and focus settings according a further embodiment of the present invention; and
Figure 3 is a diagram illustrating an exemplary configuration of a microscope including an optical system as shown in Figures 1.

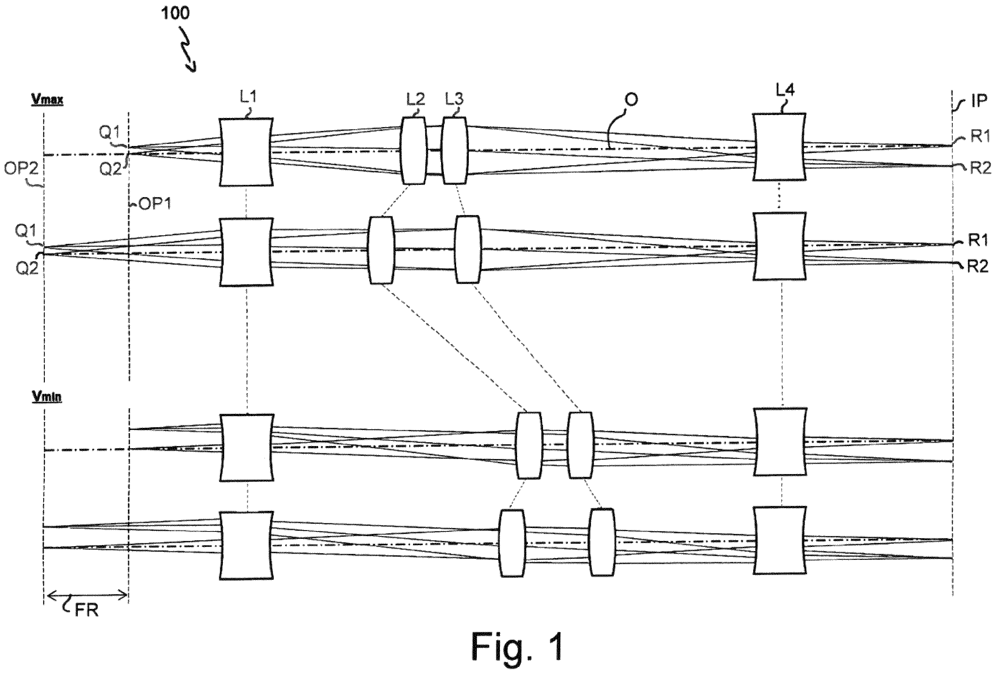

Figure 1 is a lens diagram showing an optical system 100 which may be included into a microscope for imaging an object onto an image plane IP. The image plane IP may be a plane in which an image sensor of the microscope is arranged. Alternatively, the image plane IP may be a plane in which an intermediate image is created.

Figure 1 shows in its upper half the configuration of the optical system 100 at a short focal length extremity, i.e. in a setting in which a magnification provided by the optical system 100 is maximal (Vₘₐₓ in Figure 1). Correspondingly, Figure 1 shows in its lower half the optical system 100 at a long focal length extremity, i.e. in a setting in which the magnification provided by the optical system 100 is minimal (Vₘᵢₙ in Figure 1). Further, Figure 1 shows for each of the focal length extremities two focusing states, namely a first focusing state in which a distance from an object plane OP1 to the image plane IP along an optical axis O is minimal, and a second state, in which a distance from an object plane OP2 to the image plane IP along the optical axis O is maximal. The distance between the object plane OP1 and the object plane OP2 defines a focus range FR.

The optical system 100 comprises a first lens group L1 having negative power, a second lens group L2 having positive power, a third lens group L3 having positive power and a fourth lens group L4 having negative power, the lens group L1 to L4 being arranged in this order from the image plane OP1, OP2 to the image plane IP. The first lens group L1 facing towards the object plane OP1, OP2 and the fourth lens group L4 facing to the image plane IP are stationary. In other words, upon focusing and zooming, the two outer lens groups L1, L4 of the optical system 100 remain unchanged in their positions along the optical axis O. In contrast, both inner lens groups L2, L3 of the optical system 100 are independently moved along the optical axis O for focusing the object onto the image plane IP while zooming between the long focal length extremity, i.e. Vₘᵢₙ, and the short focal length extremity, i.e. Vₘₐₓ.

Specifically, both the second lens group L2 and the third lens group L3 are moved from the object plane OP1, OP2 to the image plane IP while zooming between the long focal length extremity and the short focal length extremity. Further, the second lens group is moved towards the object plane OP1, OP2, and the third lens group L3 is moved towards the image plane IP when the distance from the object plane to the image plane IP is increased, i.e. when the object plane is moved from OP1 to OP2. This focusing movement of the second lens group L2 and the third lens group L3 applies for both the long focal length extremity and the short focal length extremity.

Figure 1 shows for each zoom and focus setting two beam paths associated with object points Q1, Q2 which are spatially separated in the respective object plane OP1, OP2. The object point Q1 is imaged by the optical system 100 into an image point R1. Likewise, the object point Q2 is imaged by the optical system 100 into an image point R2. As illustrated by the respective beam parts, the optical system 100 may be configured to be telecentric both on the object side and on the image side.

According to the embodiment shown in Figure 1, the short focal length extremity and the long focal length extremity may define a zoom range from Z1=0.9 to Z2=5. Needless to say that the embodiment is not limited to the afore-mentioned zoom range.

Each combination of zoom setting and focus setting corresponds to a combination of an associated position of the second lens group L2 and an associated position of the third lens group L3 along the optical axis O. Thus, an information assigning each combination of zoom setting and focus setting to the corresponding lens group positions of the second and third lens groups L2, L3 O may be stored beforehand so that this information can be referred to when a specific zoom setting and a specific focus setting shall be provided.

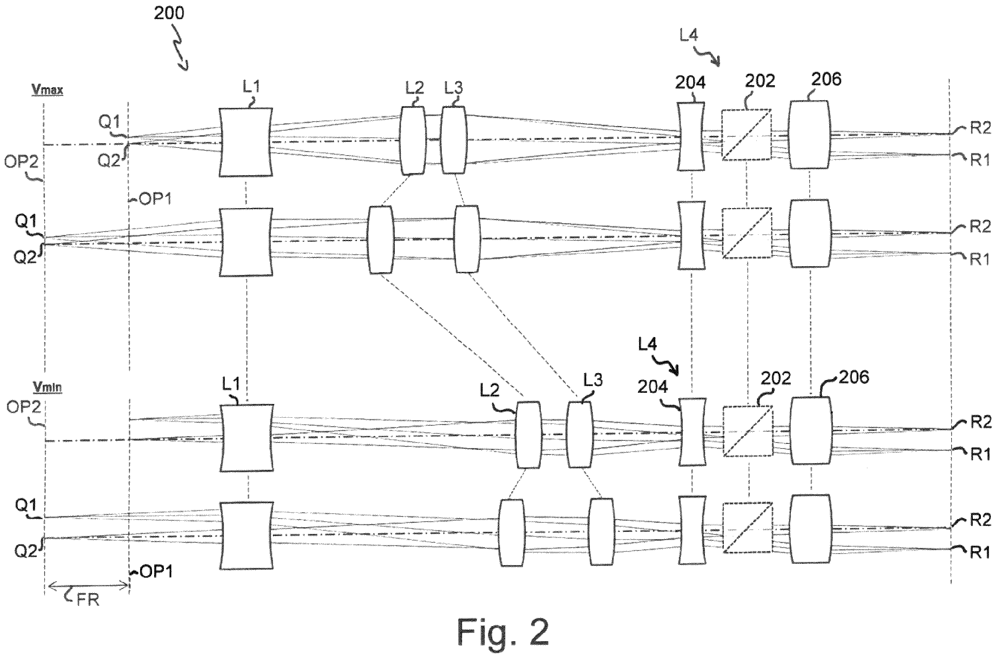

Figure 2 shows a modified embodiment referring to a lens diagram which corresponds to the lens diagram of Figure 1. According to the modified embodiment shown in Figure 2, an optical system 200 comprises an optical element 202 for coaxial light coupling. Specifically, the optical element 202 may be configured to couple illumination light coaxially into the optical system 200, the illumination light being emitted by a light source not shown in Figure 2. For this purpose, the optical element 202 may be formed as a beam splitter which is configured to reflect the illumination light towards the object plane OP1, OP2 and which is further configured to transmit the light passing the optical system 200 from the object plane OP1, OP2 to the image plane IP. The optical element 202 may be arranged within the fourth lens group L4, in particular between a first sub-lens group 204 having negative power and a second sub-lens group 206 having positive power. Within the fourth lens group L4, the first sub-lens group 204 is positioned to face the image plane OP1, OP2, and the second sub-lens group 206 is positioned to face the image plane IP.

Preferably, the optical element 202 is arranged in a segment of the optical system 200 where an angular characteristic of light passing through the optical system 200 is the same for the whole range of zoom and focus positions of the second lens group L2 and the third lens group L3. In other words, the segment of the optical system 200, which preferably includes the optical element 202, exhibits a constant angular characteristic with respect to the light passing the optical system 100 throughout the entire zoom range from the short focal length extremity to the long focal length extremity as well as throughout the entire focus range FR defined by OP1 and OP2. As the afore-mentioned angular characteristic remains unchanged while performing the coupled zoom and focus operation, the light passing the optical system 200 from the object plane OP1, OP2 to the image plane IP1 can be supplied to all zoom positions of the second and third lens group L2, L3 without any need to perform a corresponding zoom operation on the illumination light path which is coupled into the optical system 200 by means of the optical element 202.

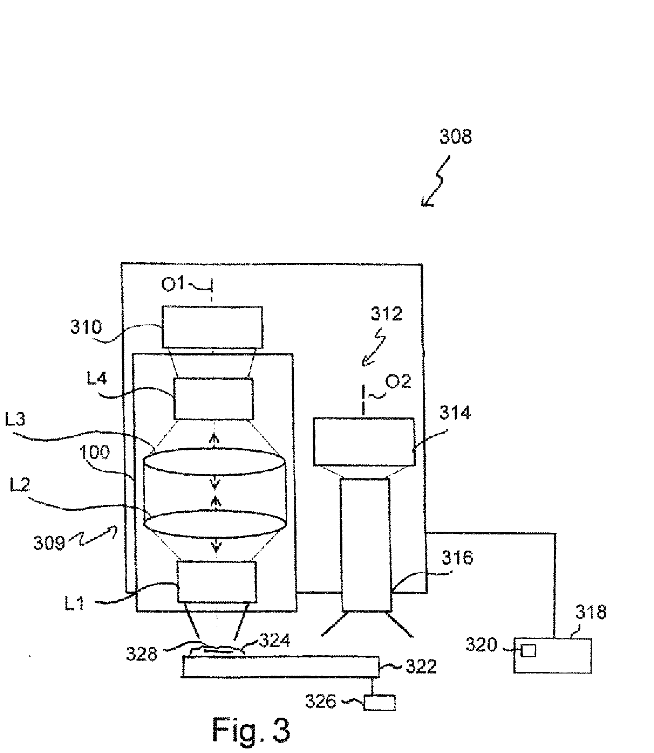

Figure 3 shows an embodiment of a microscope 308 which may comprise the optical system 100 shown in Figure 1. Specifically, the microscope 308 includes a first magnification changing subsystem 309 which comprises a first digital camera 310 and a first optical magnification system which is formed by the optical system 100 as shown in Figure 1. The first digital camera 310 and the optical system 100 are aligned along a first optical axis O1.

The microscope 308 further comprises a second magnification changing subsystem 312 including a second digital camera 314 and a second optical magnification system 316. The second digital camera 314 and the second optical magnification system 316 are aligned along a second optical axis O2.

The microscope 308 further comprises a controller 318 including a memory 320. Further, the microscope 308 comprises a microscope stage 322 on which an object 324 is arranged. The microscope stage 322 is movable in a direction orthogonal to the optical axis O1 and O2 by means of a positioning device 326. In particular, the controller 318 is configured to cause the positioning device 326 to laterally shift the microscope stage 322 such that a target region 328 of the object 324 is positioned on the optical axis O1 of the first magnification changing subsystem 309 or the optical axis O2 of the second magnification changing subsystem 312.

Whereas the first magnification changing subsystem 309 comprising the optical system 100 may be used as an optical zoom system, the second magnification changing subsystem 312 may be used as a digital zoom system. For this, the second digital camera 314 may be provided with a digital zoom function whereas the second optical magnification system 316 is configured to provide a fixed magnification.

For instance, in the configuration shown in Figure 3, the second magnification changing subsystem 312 may be used to generate an overview image when its optical axis O2 is aligned with the target region 328 of the object 324. As soon as the overview image has been generated, the first magnification changing subsystem 309 is aligned with the target region 328, whereupon the optical system 100 is controlled to perform the combined focus and zoom operation as described above in order to adjust a desired magnification while focusing on the target region 328. For this, the controller 318 may retrieve the information for correctly positioning the second lens group L2 and the third lens group L3 along the optical axis O1 from the memory 320.

It is to be noted that the microscope 308 shown in Figure 3 represents merely an exemplary microscope configuration which is suitable to apply the combined zooming and focusing operation provided by the optical systems 100, 200 as shown in Figures 1 and 2, respectively. Thus, the optical systems 100, 200 may be used in any other type of microscope which requires focusing and zooming.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of Reference Signs

- 100: optical system
- 200: optical system
- 202: optical element
- 204: first sub-lens group
- 206: second sub-lens group
- 308: microscope
- 309: first magnification changing subsystem
- 310: first digital camera
- 312: second magnification changing subsystem
- 314: second digital camera
- 316: second optical magnification system
- 318: controller
- 320: memory
- 322: microscope stage
- 324: object
- 326: positioning device
- 328: target region
- O: optical axis
- O1: optical axis
- O2: optical axis
- L1: first lens group
- L2: second lens group
- L3: third lens group
- L4: fourth lens group
- IP: image plane
- OP1: object plane
- OP2: object plane
- R1: image point
- R2: image point
- Q1: object point
- Q2: object point

## Claims

1. An optical system (100, 200) for imaging an object (342) onto an image plane (IP) of a microscope (308), comprising in total four lens groups (L1, L2, L3, L4), wherein:
a first lens group (L1) having negative power, a second lens group (L2) having positive power, a third lens group (L3) having positive power and a fourth lens group (L4) having negative power are arranged in this order from an object side,
the first lens group (L1) and the fourth lens group (L4) are stationary, and
the second lens group (L2) and the third lens group (L3) are independently movable along an optical axis (O) of the optical system (100, 200) for focusing the object (324) onto the image plane (IP) while zooming between a short focal length extremity and a long focal length extremity.

2. The optical system (100, 200) according to claim 1, wherein the optical system (100, 200) is configured to be telecentric on an object side and telecentric on an image side.

3. The optical system (100, 200) according to one of the preceding claims, wherein the short focal length extremity and the long focal length extremity define a zoom range from Z1=0.9 to Z2=5.

4. The optical system (100, 200) according to one of the preceding claims, comprising memory means (320) for storing information assigning each combination of zoom setting and focus setting to a corresponding lens group position along the optical axis for each of the second and third lens groups (L2, L3).

5. The optical system (200) according to one of the preceding claims, comprising an optical element (202) for coaxial light coupling.

6. The optical system (200) according to claim 5, wherein the optical element (202) is arranged in a segment of the optical system (200) where the angular characteristic of light passing the optical system is the same for the whole range of zoom and focus positions of the second lens group (L2) and the third lens group (L3).

7. The optical system (200) according to claim 6, wherein the optical element (202) is arranged in the fourth lens group (L4).

8. The optical system (200) according to claim 7, wherein the fourth lens group (L4) comprises a first sub-lens group (204) having negative power and a second sub-lens group (206) having positive power arranged in this order from the object side, and
the optical element (202) is arranged between the first sub-lens group (204) and the second sub-lens group (206).

9. Method for imaging an object (328) onto an image plane (IP) of a microscope (308) by means of the optical system (200) according to one of the preceding claims, comprising the steps of:
holding the first lens group (L1) and the fourth lens group (L4) stationary during imaging of the object (328); and
moving the second lens group (L2) and the third lens group (L3) independently along the optical axis (O) for focusing the object (328) onto the image plane (IP) while zooming between a short focal length extremity and a long focal length extremity.

10. A microscope (308) comprising an image plane (IP) and an optical system (100) according to one of the claims 1 to 8.

## Patentansprüche

1. Optisches System (100, 200) zur Abbildung eines Objekts (342) auf eine Bildebene (IP) eines Mikroskops (308), umfassend insgesamt vier Linsengruppen (L1, L2, L3, L4), wobei:
eine erste Linsengruppe (L1), die negative Leistung aufweist, eine zweite Linsengruppe (L2), die positive Leistung aufweist, eine dritte Linsengruppe (L3), die positive Leistung aufweist, und eine vierte Linsengruppe (L4), die negative Leistung aufweist, von einer Objektseite aus in dieser Reihenfolge angeordnet sind,
die erste Linsengruppe (L1) und die vierte Linsengruppe (L4) stationär sind und die zweite Linsengruppe (L2) und die dritte Linsengruppe (L3) unabhängig entlang einer optischen Achse (O) des optischen Systems (100, 200) beweglich sind, um das Objekt (324) auf die Bildebene (IP) zu fokussieren, während zwischen einem kurzen Brennweiten-Endpunkt und einem langen Brennweiten-Endpunkt gezoomt wird.

2. Optisches System (100, 200) nach Anspruch 1, wobei das optische System (100, 200) konfiguriert ist, um auf einer Objektseite telezentrisch und auf einer Bildseite telezentrisch zu sein.

3. Optisches System (100, 200) nach einem der vorstehenden Ansprüche, wobei der kurze Brennweiten-Endpunkt und der lange Brennweiten-Endpunkt einen Zoombereich von Z1=0,9 bis Z2=5 definieren.

4. Optisches System (100, 200) nach einem der vorstehenden Ansprüche, umfassend Speichermittel (320) zum Speichern von Informationen, die für jede von der zweiten und der dritten Linsengruppe (L2, L3) jede Kombination aus Zoomeinstellung und Fokuseinstellung einer entsprechenden Linsengruppenposition entlang der optischen Achse zuordnen.

5. Optisches System (200) nach einem der vorstehenden Ansprüche, umfassend ein optisches Element (202) zur koaxialen Lichtkopplung.

6. Optisches System (200) nach Anspruch 5, wobei das optische Element (202) in einem Segment des optischen Systems (200) angeordnet ist, in dem die Winkelcharakteristik des durch das optische System hindurchgehenden Lichts für den gesamten Bereich der Zoom- und Fokuspositionen der zweiten Linsengruppe (L2) und der dritten Linsengruppe (L3) die gleiche ist.

7. Optisches System (200) nach Anspruch 6, wobei das optische Element (202) in der vierten Linsengruppe (L4) angeordnet ist.

8. Optisches System (200) nach Anspruch 7, wobei die vierte Linsengruppe (L4) eine erste Unterlinsengruppe (204), die negative Leistung aufweist, und eine zweite Unterlinsengruppe (206), die positive Leistung aufweist, umfasst, die von der Objektseite aus in dieser Reihenfolge angeordnet sind, und
wobei das optische Element (202) zwischen der ersten Unterlinsengruppe (204) und der zweiten Unterlinsengruppe (206) angeordnet ist.

9. Verfahren zur Abbildung eines Objekts (328) auf eine Bildebene (IP) eines Mikroskops (308) mittels des optischen Systems (200) nach einem der vorstehenden Ansprüche, umfassend die Schritte zum:
Halten der ersten Linsengruppe (L1) und der vierten Linsengruppe (L4) während des Abbildens des Objekts (328) stationär; und
Bewegen der zweiten Linsengruppe (L2) und der dritten Linsengruppe (L3) unabhängig entlang der optischen Achse (O), um das Objekt (328) auf die Bildebene (IP) zu fokussieren, während zwischen einem kurzen Brennweiten-Endpunkt und einem langen Brennweiten-Endpunkt gezoomt wird.

10. Mikroskop (308), umfassend eine Bildebene (IP) und ein optisches System (100) nach einem der Ansprüche 1 bis 8.

## Revendications

1. Système optique (100, 200) d'imagerie d'un objet (342) sur un plan d'image (IP) d'un microscope (308), comprenant au total quatre groupes de lentilles (L1, L2, L3, L4), dans lequel :
un premier groupe de lentilles (L1) présentant une puissance négative, un deuxième groupe de lentilles (L2) présentant une puissance positive, un troisième groupe de lentilles (L3) présentant une puissance positive et un quatrième groupe de lentilles (L4) présentant une puissance négative sont agencés dans cet ordre depuis un côté objet,
le premier groupe de lentilles (L1) et le quatrième groupe de lentilles (L4) sont fixes, et le deuxième groupe de lentilles (L2) et le troisième groupe de lentilles (L3) sont indépendamment mobiles le long d'un axe optique (O) du système optique (100, 200) pour la mise au point de l'objet (324) sur le plan d'image (IP) tout en ajustant la focale entre une extrémité à longueur focale courte et une extrémité à longueur focale longue.

2. Système optique (100, 200) selon la revendication 1,
dans lequel le système optique (100, 200) est configuré pour être télécentrique sur un côté objet et télécentrique sur un côté image.

3. Système optique (100, 200) selon l'une des revendications précédentes, dans lequel l'extrémité à longueur focale courte et l'extrémité à longueur focale longue définissent une plage de focale allant de Z1=0,9 à Z2=5.

4. Système optique (100, 200) selon l'une des revendications précédentes, comprenant un moyen mémoire (320) pour stocker des informations attribuant chaque combinaison de réglage de focale et de réglage de mise au point à une position de groupe de lentilles correspondante le long de l'axe optique pour chacun des deuxième et troisième groupes de lentilles (L2, L3).

5. Système optique (200) selon l'une des revendications précédentes, comprenant un élément optique (202) pour couplage coaxial de lumière.

6. Système optique (200) selon la revendication 5, dans lequel l'élément optique (202) est agencé dans un segment du système optique (200) où la caractéristique angulaire de lumière passant dans le système optique est la même pour toute la plage de positions de focale et de mise au point du deuxième groupe de lentilles (L2) et du troisième groupe de lentilles (L3).

7. Système optique (200) selon la revendication 6, dans lequel l'élément optique (202) est agencé dans le quatrième groupe de lentilles (L4).

8. Système optique (200) selon la revendication 7, dans lequel le quatrième groupe de lentilles (L4) comprend un premier sous-groupe de lentilles (204) présentant une puissance négative et un deuxième sous-groupe de lentilles (206) présentant une puissance positive agencés dans cet ordre depuis le côté objet, et l'élément optique (202) est agencé entre le premier sous-groupe de lentilles (204) et le deuxième sous-groupe de lentilles (206).

9. Procédé d'imagerie d'un objet (328) sur un plan d'image (IP) d'un microscope (308) au moyen du système optique (200) selon l'une des revendications précédentes, comprenant les étapes de :
maintien fixe du premier groupe de lentilles (L1) et du quatrième groupe de lentilles (L4) pendant l'imagerie de l'objet (328) ; et
déplacement du deuxième groupe de lentilles (L2) et du troisième groupe de lentilles (L3) indépendamment le long de l'axe optique (O) pour la mise au point de l'objet (328) sur le plan d'image (IP) tout en ajustant la focale entre une extrémité à longueur focale courte et une extrémité à longueur focale longue.

10. Microscope (308) comprenant un plan d'image (IP) et un système optique (100) selon l'une des revendications 1 à 8.
